# EUROPÄISCHE PATENTSCHRIFT

(11) **EP 3 362 707 B1**
(45) Veröffentlichungstag und Bekanntmachung des Hinweises auf die Patenterteilung: **09.12.2020**
(21) Anmeldenummer: 16781323.7
(22) Anmeldetag: 05.10.2016
(51) Int. Cl.: F16H 57/00, B65G 23/08

(54) **VORRICHTUNG UND VERFAHREN ZUR SCHWINGUNGSTILGUNG BEI FÖRDERANTRIEBEN**
DEVICE AND METHOD FOR VIBRATION DAMPING IN CONVEYOR DRIVES
DISPOSITIF ET PROCÉDÉ D'AMORTISSEMENT DES VIBRATIONS POUR LES ENTRAÎNEMENTS D'INSTALLATIONS DE TRANSPORT

(30) Priorität: 15.10.2015 DE 102015220030
(43) Veröffentlichungstag der Anmeldung: 22.08.2018
(73) Patentinhaber: Voith Patent GmbH, 89522 Heidenheim (DE)
(72) Erfinder: STOLCH, Heiko, 73466 Lauchheim (DE); HORNBERGER, Daniel, 91555 Feuchtwangen (DE); VOGEL, Peter, 74564 Crailsheim (DE)
(74) Vertreter: Voith Patent GmbH - Patentabteilung
(86) Internationale Anmeldenummer: PCT/EP2016/073707
(87) Internationale Veröffentlichungsnummer: WO 2017/063920

(56) Entgegenhaltungen:
- EP-A1- 2 727 861
- DE-A1- 2 345 935
- DE-A1-102011 119 045
- DE-B- 1 148 108
- GB-A- 466 755

## Beschreibung

Die Erfindung betrifft ein Antriebssystem für Förderantriebe, insbesondere bei Gurtförderern und ein Verfahren zur Schwingungstilgung am Antriebssystem eines Förderantriebes.

Von der Firma Siemens werden unter anderem Flender Förderbandantriebe für Förderbänder beworben und vertrieben. Die von Siemens vertriebenen industriellen Antriebssysteme werden unter der Bezeichnung Integrated-DriveSystems-Konzepts, kurz IDS, beworben. Diese Antriebssysteme umfassen einen Frequenzumrichter, einen Motor und Kupplung und Getriebe. Nachteilig ist, dass diese Antriebe mit Frequenzumrichter aufwendig sind.

Die Firma Nord Drivesystems bewirbt ein Baukasten-Antriebssystem, bei dem die Komponenten gemäß den Kundenwünschen und Kundenanforderungen kombiniert werden können. Die einzelnen Komponenten werden auf einem Träger montiert. Nachteilig ist, dass bei allen Antriebssystemen Schwingungen auftreten, die durch die Wechselwirkung der einzelnen Komponenten bedingt sein können. Insbesondere können durch Betriebsfrequenzen nahe der Systemeigenfrequenzen unzulässig hohe Schwingungen auftreten. Die Betriebsfrequenz ergibt sich aus der Motornenndrehzahl des Asynchronmotors. Die Motornenndrehzahl ergibt sich aus der sogenannten Motorsynchrondrehzahl und dem Motorschlupf (häufig im Bereich zwischen 0,5 bis 10%).

Aus dem Firmenprospekt "Driving Greater Performance and Relaibility - Belt Conveyor Drive Solutions" von Voith Turbo GmbH & Co. KG sind Antriebssysteme, die nach Kundenwüschen gestaltet werden, bekannt. Die einzelnen Module des jeweiligen Antriebssystems werden auf einem Träger, auch als Schwinge bezeichnet, montiert. Die Hauptkomponenten eines Antriebssystems sind Motor, Turbokupplung, auch als hydrodynamische Kupplung bezeichnet, mindestens eine Verbindungskupplung und Getriebe. Über die Komponenten Motor, Turbokupplung und Getriebe hinaus kann ein Antriebssystem weitere Komponenten wie eine zweite Verbindungskupplung aufweisen. Weiterhin kann eine Industriebremse vorgesehen sein, mittels der die Antriebseinheit im Notfall abgebremst werden und/oder die als Betriebs- und Haltebremse vorgesehen sein kann.

Aus der DE 23 45 935 ist eine Antriebseinheit für einen Förderbandantrieb bekannt. Der Förderbandantrieb weist einen Antriebsmotor auf. Der Antriebsmotor ist über eine Kupplung mit einem Getriebe verbunden. Die als Anreibswelle bezeichnete Getriebeausgangswelle ist mit einer Trommel eines Förderbandes verbunden. Die Einheit aus Antriebsmotor, Kupplung und Getriebe sind auf einer Schwinge angeordnet. Die Schwinge ist mittels eines Lenkers und eine einstellbaren Federelement gelagert.

Der Erfindung liegt die Aufgabe zugrunde, ein Antriebssystem weiterzubilden, bei dem auftretende Schwingungen reduziert sind. Insbesondere sollen senkrecht zur Ausrichtung des Antriebsstranges auftretende Schwingungen reduziert werden.

Die erfindungsgemäße Lösung ist durch die Merkmale der unabhängigen Ansprüche charakterisiert. Vorteilhafte Ausgestaltungen sind in den Unteransprüchen wiedergegeben.

Die Erfindung betrifft ein Antriebssystem für Förderanlagen. Unter Förderanlagen sind insbesondere Gurtförderer und Kettenförderer zu verstehen. Die Antriebssysteme für Förderanlagen weisen einen Motor auf, der mit einem nachgeschalteten Getriebe wirkverbunden ist. Das Antriebssystem ist mittels einer Drehmomentstütze gelagert. Der Motor und das Getriebe sind axial hintereinander angeordnet, wobei zwischen Motor und Getriebe weitere Komponenten wie Kupplungen angeordnet sein können. An dem axialen motorseitigen Ende des Antriebssystems ist ein Tilger angeordnet. Es hat sich gezeigt, dass sich durch diese Position des Tilgers die auftretenden Schwingungen des Antriebssystems effektiv reduzieren lassen. Gerade in einem Antriebssystem ohne Tilger sind die auftretenden Schwingungen am motorseitigen axialen Ende des Antriebssystems besonders groß. Hinzu kommt, dass diese Position gut zugänglich ist und damit die Montage des Tilgers problemlos möglich ist. Gerade bei Antriebssystemen für den Untertageeinsatz ist der Bauraum senkrecht zur axialen Erstreckung des Antriebssystems knapp.

Vorzugsweise ist das motorseitige axiale Ende beabstandet zur Drehmomentstütze. Dieser Abstand stellt einen Hebel dar. Durch diesen Hebel wird die Wirkung des Tilgers verstärkt. Vorzugsweise ist die Drehmomentstütze im Bereich zwischen Motorschwerpunkt und Getriebeschwerpunkt des Antriebssystems angeordnet.

Insbesondere bei derartigen Antriebssystemen hat sich eine Anordnung des Tilgers in axialer Fortsetzung zur axialen Erstreckung des Antriebssystems als vorteilhaft herausgestellt, weil aufgrund der Hebelwirkung der Tilger besonders effektiv ist. Der Hebel ergibt sich aus dem Abstand der Drehmomentstütze und dem Schwerpunkt der Tilgermasse. Hinzu kommt der Aspekt, dass kein zusätzlicher Bauraum senkrecht zur axialen Erstreckung des Antriebssystems benötigt wird.

In einer vorteilhaften Ausführungsform ist vorgesehen das Antriebssystem mittels einer Drehmomentstütze vertikal abzustützen. Die vertikale Richtung ist dabei entgegengesetzt zur wirkenden Gewichtskraft gerichtet. Eine horizontale Richtung ist senkrecht zur axialen Erstreckung des Antriebssystems und zur vertikalen Richtung.

In einer vorteilhaften Ausführungsform ist vorgesehen einen Tilger einzusetzen, der in mindestens zwei Raumrichtungen auf unterschiedliche Tilgereigenfrequenzen abgestimmt bzw. abstimmbar ist. Vorzugsweise ist im Resonanzfall, Betriebsfrequenz entspricht Systemeigenfrequenz, der Tilger auf die Eigenfrequenzen des Antriebssystems in vertikaler beziehungsweise horizontaler Richtung senkrecht zur axialen Erstreckung des Antriebssystems abgestimmt. Die Eigenfrequenzen des Antriebssystems können gemessen werden und auch unter Heranziehung der Massen, Steifigkeiten und der Stützpunkte des Antriebssystems berechnet werden.

Auch wenn kein Resonanzfall vorliegt, hat es sich zur Optimierung des Schwingverhaltens als vorteilhaft herausgestellt, dass die Tilgereigenfrequenz auf die Betriebsfrequenz des Antriebssystems abgestimmt ist. Eine Abstimmung erfolgt zur maximal Reduzierung der Schwinggeschwindigkeit. Die Betriebsfrequenz ergibt sich aus der Motornenndrehzahl des Asynchronmotors. Die Motornenndrehzahl ergibt aus der sogenannten Motorsynchrondrehzahl und dem Motorschlupf (häufig im Bereich zwischen 0,5 bis 10%, vorzugsweise 0,5 bis 3%).
Für die Antriebssysteme häufig auftretende Motorsynchrondrehzahlen sind:

| Motorsynchrondrehzahl | Motornenndrehzahl | Motornennfrequenz bzw. Betriebsfrequenz |
|---|---|---|
| 3600 min^-1 | 3240 min^-1 bis 3582 min^-1 | 54,0 Hz bis 59,7 Hz |
| 3000 min^-1 | 2700 min^-1 bis 2985 min^-1 | 45,0 Hz bis 49,8 Hz |
| 1800 min^-1 | 1620 min^-1 bis 1791 min^-1 | 27,0 Hz bis 29,9 Hz |
| 1500 min^-1 | 1350 min^-1 bis 1493 min^-1 | 22,5 Hz bis 24,9 Hz |
| 1200 min^-1 | 1080 min^-1 bis 1194 min^-1 | 18,0 Hz bis 19,9 Hz |
| 1000 min^-1 | 900 min^-1 bis 995 min^-1 | 15,0 Hz bis 16,6 Hz |
| 900 min^-1 | 810 min^-1 bis 896 min^-1 | 13,5 Hz bis 14,9 Hz |
| 750 min^-1 | 675 min^-1 bis 746 min^-1 | 11,3 Hz bis 12,4 Hz |

In einer bevorzugten Ausführungsform ist vorgesehen, einen Tilger einzusetzen, dessen Gesamtmasse kleiner 10%, vorzugsweise kleiner 5%, der Gesamtmasse des Antriebssystems beträgt. Die Gesamtmasse des Tilgers umfasst dabei nicht die Elemente, die erforderlich sind, um den Tilger an dem Antriebssystem zu befestigen. Schon durch Hinzufügen dieser überschaubaren Masse lässt sich eine erhebliche Reduzierung der Schwingungen erreichen. Dabei wird der Effekt der Schwingungstilgung des Tilgers aufgrund seiner Position und des wirksamen Hebelgesetzes verstärkt. Der Hebel ergibt sich aus dem Abstand der Drehmomentstütze und dem Schwerpunkt der Tilgermasse.

Eine vorteilhafte Ausgestaltung besteht darin, dass der Tilger zur Vermeidung von Kippmomenten flächig gelagert ist. Unter einer flächigen Lagerung ist eine Lagerung mit in einer Ebene liegenden mindestens drei Stützpunkten zu verstehen. Die derart bestimmte Ebene wird auch als Stützfläche bezeichnet. Durch die flächige Lagerung kann das Auftreten von Kippmomenten vermieden werden. Dabei hat es sich als vorteilhaft herausgestellt, dass die Stützfläche parallel zur axialen Erstreckung des Antriebssystems und der horizontalen Richtung angeordnet ist.

In einer vorteilhaften Ausführungsform ist für eine flächige Lagerung ein Podest an dem motorseitigen axialen Ende des Antriebssystems vorgesehen. Mittels des Podestes ist eine Anordnung von als Standartbauteil verfügbaren Tilgern möglich, so dass die eine Tilgereigenfrequenz in vertikaler Richtung wirksam ist und die andere abweichende Tilgereigenfrequenz in horizontaler Richtung des Antriebssystems wirksam ist.

In einer Ausführungsform ist vorgesehen, dass das Antriebssystem eine Schwinge zur Lagerung und Befestigung von Komponenten des Antriebsstranges wie Motor und Getriebe aufweist. Es hat sich als vorteilhaft herausgestellt, den Tilger am motorseitigen Ende der Schwinge anzuordnen.

In einer Ausführungsform ist vorgesehen die Schwinge am motorseitigen Ende mit einem Podest zu versehen. Das Podest weist eine flächige horizontal-axial ausgerichtete Podestgrundplatte für eine flächige Lagerung des Tilgers auf. Durch die Grundplatte wird eine besonders gute Lagerung des Tilgers erreicht. Durch diese Lagerung wird das Auftreten von Kippmomenten beim Tilger verhindert. Diese Kippmomente können insbesondere dann auftreten, wenn der Tilger nur durch ein Befestigungselement mit dem Antriebssystem verbunden ist.

In einer vorteilhaften Ausführung ist vorgesehen, den Tilger durch eine Stütze in vertikaler Richtung abzustützen. Es kann vorgesehen sein, dass diese Stütze direkt den Tilger abstützt oder die Grundplatte des Podestes durch die Stütze abgestützt wird. Diese Stütze trägt zur Stabilität der Verbindung des Tilgers mit dem Antriebssystem bei.

Es hat sich als vorteilhaft herausgestellt einen Tilger einzusetzen, der ein Dämpfungselement aufweist, wobei das Dämpfungselement ein Elastomer mit der Härte 25 bis 95 Shore, vorzugsweise der Härte 70 bis 80 Shore, ist.

In einer Ausführungsform ist vorgesehen, einen Tilger einzusetzen, bei dem der Dämpfungsgrad D im Bereich von 0,04 bis 0,16, vorzugsweise 0,07 bis 0,15, liegt.

Es hat sich als vorteilhaft herausgestellt eine Schwinge für ein Antriebssystem an einem axialen Ende mit einem Podest für eine flächige Lagerung eines Tilgers zu versehen. Das Podest ist mit der Schwinge vorzugsweise fest verbunden. Eine derartige Verbindung kann mittels Schweißen, Verschrauben und/oder Vernieten hergestellt sein.

Die erfindungsgemäße Lösung wird nachfolgend anhand von Figuren erläutert. In den nachfolgend detailliert dargestellten Ausführungsbeispielen ist eine Ausführung mit Schwinge gezeigt. In gleicher Weise, wie der Tilger an der Schwinge befestigt ist, könnte der Tilger mit dem Gehäuse des Motors des Antriebssystems verbunden sein.

Es zeigt:
- Figur 1:: Antriebsstrang mit Tilger und Drehmomentstütze
- Figur 2:: Drehmomentstütze im Schnitt
- Figur 3:: Drehmomentstütze
- Figur 4 :: Tilger am axialen Ende der Schwinge
- Figur 5:: Schwinge mit einem auf einer Ebene gelagerten Tilger

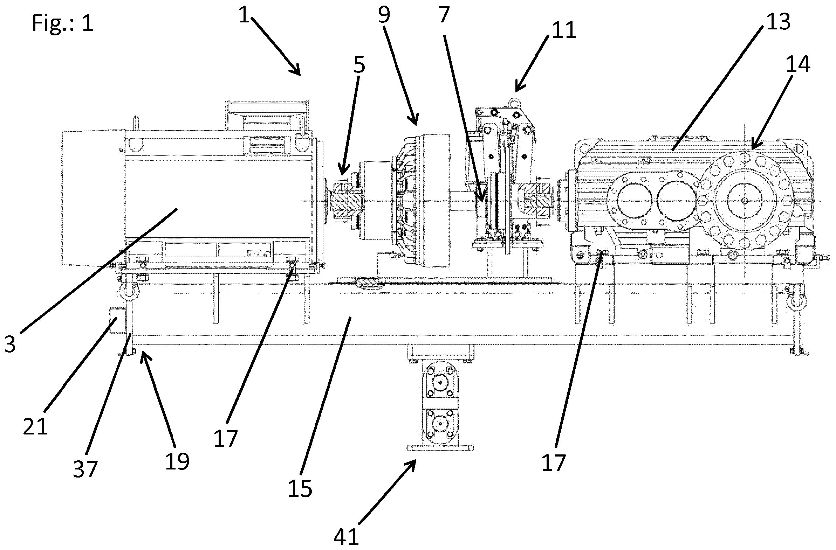

In Figur 1 ist ein Antriebsstrang 1 gezeigt. Ein Motor 3 ist über eine Verbindungskupplung 5 mit der hydrodynamischen Kupplung 9 verbunden. Die hydrodynamische Kupplung 9 umfasst mindestens Pumprad und ein Turbinenrad. Das Pumprad ist mit einer Eingangswelle der hydrodynamischen Kupplung 9 verbunden. Durch Rotationsbewegung des Pumprades wird hydraulisch das Turbinenrad angetrieben und damit die Ausgangswelle der hydrodynamischen Kupplung 9. Die hydrodynamische Kupplung 9, insbesondere die Ausgangswelle der hydrodynamischen Kupplung, ist über eine zweite Verbindungskupplung 7 mit einem Getriebe 13 verbunden. Eine Bremse 11 ist zwischen der hydrodynamischen Kupplung 9 und dem Getriebe 13 angeordnet. Durch die Bremse 11 kann das Antriebssystem im Notfall gestoppt werden. Weiterhin kann die Bremse auch als Betriebs- und Haltebremse eingesetzt werden. In dem dargestellten Ausführungsbeispiel ist die Bremse 11 durch eine zweite Verbindungskupplung 7 mit der hydrodynamischen Kupplung 9 wirkverbunden. Eine getriebeabtriebsseitig angeordnete Verbindungskupplung 14 stellt eine Schnittstelle zur Trommel eines Förderbandes oder einer Förderkette dar.

Diese Komponenten sind auf einem Träger 15, im Folgenden als Schwinge 15 bezeichnet, angeordnet und mit dem Träger 15 über Befestigungselemente 17 fest verbunden. Die Schwinge 15 wird durch eine Drehmomentstütze 41 abgestützt.

An dem axialen motorseitigen Ende der Schwinge 19 ist die Schwinge 15 mit einer Endplatte 37 versehen. An diesem Ende ist ein Tilger 21 an der Schwinge 15 für eine Schwingungstilgung angeordnet. Eine Schwingungsanregung der Schwinge 15 resultiert aus den von den einzelnen Komponenten auf die Schwinge 15 übertragenen Schwingungen. Weiterhin wirken auf die Schwinge 15 die durch die Masse der einzelnen Komponenten wirkende statische Gewichtskräfte.

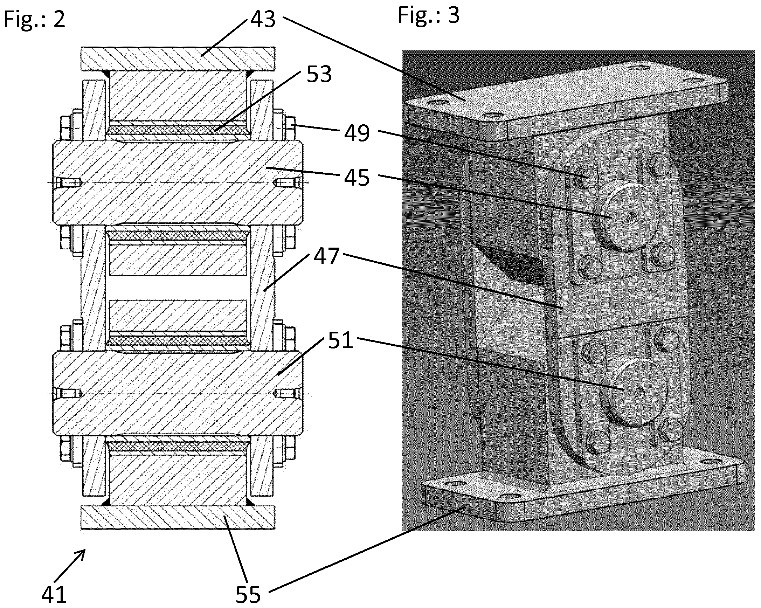

Anhand von Figur 2 und 3 wird die Drehmomentstütze 41 näher beschrieben. Die Drehmomentstütze 41 weist Eingangselement 43 auf. Das Eingangselement 43 ist fest mit der Schwinge 15 verbindbar. In dem dargestellten Ausführungsbeispiel ist eine feste Verbindung mittels Verschraubung hergestellt. Das Eingangselement 43 ist auf einer ersten Achse 45 gelagert, wobei zwischen dem Eingangselement 43 und erster Achse 45 eine elastomere Hülse 53 angeordnet ist. Die erste Achse 45 ist beidseitig mit Verbindungselementen 47 mittels Befestigungselementen 49 fest verbunden. Mit den Verbindungselementen 47 ist eine zweite Achse 51 mittels Befestigungselementen 49 verbunden. Diese zweite Achse 51 ist ebenfalls von einer elastomeren Hülse 53, auch als Dämpfungshülse bezeichnet, koaxial umgeben. Über diese elastomere Hülse 53 ist die zweite Achse mit einem Ausgangselement 55 fest verbunden. Das Ausgangselement 55 ist mit der Umgebung fest verbindbar. In dem dargestellten Ausführungsbeispiel sind Bohrungen vorgesehen, so dass eine Befestigung durch Schrauben möglich ist.

Die elastomeren Hülsen 53 tragen zur Schwingungsdämpfung der Schwinge 15 bei. Als Material für die elastomeren Hülsen 53 haben sich Naturkautschuk (NR/NK), und Ethylen-Acrylat-Kautschuk (AEM) und Acrylnitril-Butadien-Kautschuk (NBR) als besonders geeignet herausgestellt.

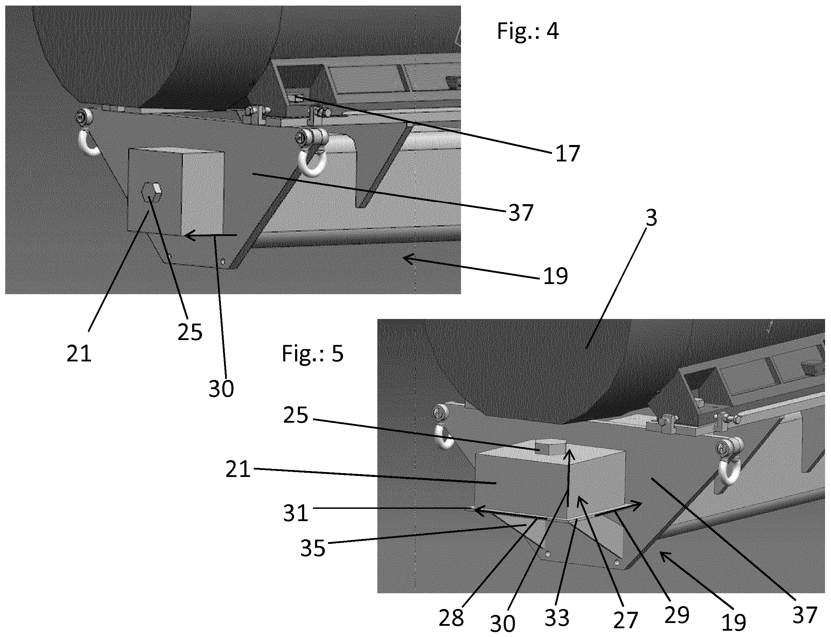

Zur Reduktion von Schwingungen des Antriebssystems ist der Tilger 21 vorgesehen. Der Tilger 21 ist an dem motorseitigen axialen Ende 19 der Schwinge 15 angeordnet, wie in Figur 4 gezeigt. Als Tilger kann z.B. ein von der Firma ESM vertriebener Tilger vorgesehen sein. Solch ein Tilger umfasst eine Hauptmasse 27 in Form von Stahlplatten. Diese Stahlplatten sind über ein Elastomer mit einer zentral angeordneten Hülse verbunden. Ein derartiger Tilger 21 ist ein passiver Tilger 21. Passive Tilger benötigen keine zusätzliche Energiequelle und werden alleine durch das zu tilgende System zu Schwingungen angeregt. In dem dargestellten Ausführungsbeispiel ist der Tilger 21 mit einem Elastomer als Dämpfungselement versehen, vorzugsweise mit einer Shore A Härte von 70-80. Als Elastomer kann ein Naturkautschuk (NR/NK) oder ein Ethylen-Acrylat Kautschuk (AEM) vorgesehen sein.

Die zentral angeordnete Hülse stellt eine Axialdurchführung dar und wird für die Befestigung des Tilgers 21 verwendet. Im dargestellten Ausführungsbeispiel ist eine Schraube 25 für die Befestigung des Tilgers 21 an der Schwinge 15 vorgesehen. Die zentrale Hülse und damit die Schraube verlaufen in Z-Richtung des Tilgers 21. Die X/Y Ebene ist senkrecht zur Z-Richtung angeordnet. Der Tilger wirkt in alle drei Raumachsen und ist damit dreiachsig. Jedoch ist es nur möglich die Tilgereigenfrequenzen des Tilgers 21 in der Z-Richtung 30 unabhängig von der X/Y-Richtung einzustellen. Derartige Tilger können als Standartbauteil beispielswiese von der Firma ESM bezogen werden.

Die axiale Erstreckung des Tilgers 21 ist in horizontaler Richtung angeordnet. Wünschenswert wäre es die an der Schwinge auftretenden Schwingungen unabhängig voneinander in horizontaler Richtung und vertikaler Richtung tilgen zu können. Derartige Tilger mit in drei Achsen voneinander einstellbaren Tilgereigenfrequenzen sind zwar derzeit technisch möglich, stellen aber Sonderanfertigungen dar und sind damit teuer.

Figur 5 zeigt ein weiteres Ausführungsbeispiel mit einem zuvor näher erläuterten Tilger 21. Im Vergleich zu Figur 4 ist der Tilger 21 bei dem in Figur 5 dargestellten Ausführungsbeispiel mit seiner Z-Richtung, Z-Richtung 30 des Tilgers 21, in vertikaler Richtung angeordnet. Die Z-Richtung 30 des Tilgers 21 entspricht wiederum der Ausrichtung der axialen Erstreckung der zentralen Bohrung des Tilgers 21. Für die Befestigung des Tilgers 21 ist ein Podest 31 mit einer Podestgrundplatte 33 und Podeststützen 35 vorgesehen. Die Podestgrundplatte 33 ist horizontal ausgerichtet. Damit ist es möglich einen Standard-Tilger 21 mit in Z-Richtung und X/Y-Richtung 28, 29 unabhängig voneinander einstellbaren Tilgereigenfrequenzen einsetzen zu können.

Im Idealfall ist der Tilger am Ort der maximalen Schwingungsamplitude angeordnet, um maximale Wirkung zu entfalten. Bei den dargestellten Ausführungsbeispielen gemäß Figur 4 und 5 wird die Schwinge ihre maximale Schwingungsamplitude am motorseitigen axialen Ende ausbilden.

Auch bei der in Figur 5 dargestellten Ausführungsform ist der Tilger an dem motorseitigen axialen Ende der Schwinge 19 angeordnet. Bei der in Figur 5 dargestellten Ausführung ist der Tilger 21 mittels eines Podests 31 gelagert. Das Podest 31 weist eine Podestgrundplatte 33 auf. die Podestgrundplatte 33 ist horizontal angeordnet. Mittels Podeststützen 35 ist die Podestgrundplatte mit der Schwinge 15 fest verbunden.

### Bezugszeichenliste:

- 1: Antriebssystem, Drive Package
- 3: Motor
- 5: erste Vebindungskupplung
- 7: zweite Verbindungskupplung
- 9: hydrodynamische Kupplung, Turbokupplung
- 11: Bremse
- 13: Getriebe
- 14: Verbindungskupplung
- 15: Schwinge
- 17: Befestigungselement
- 19: motorseitiges axiales Ende der Schwinge
- 21: Tilger
- 25: Zentrale Schraube
- 27: Hauptmasse
- 28: X-Richtung des Tilgers
- 29: Y-Richtung des Tilgers
- 30: Z-Richtung des Tilgers
- 31: Podest
- 33: Podestgrundplatte
- 35: Podeststütze
- 37: Endplatte
- 41: Drehmomentstütze
- 43: Eingangselement
- 45: erste Achse
- 47: Verbindungselement
- 49: Befestigungselement
- 51: zweite Achse
- 53: Dämpfungshülse, elastomere Hülse
- 55: Ausgangselement

## Patentansprüche

1. Antriebssystem (1) für Förderanlagen mit auf einer Schwinge (15) gelagerten Motor (3) und Getriebe (13),
**dadurch gekennzeichnet,**
**dass** die Schwinge mittels einer Drehmomentstütze (41) gelagert ist, wobei am axialen motorseitigen Ende (19) der Schwinge (15) ein Tilger (21) angeordnet ist, wobei der Tilger beabstandet zur Drehmomentstütze angeordnet ist für die Bereitstellung eines Hebels.

2. Antriebssystem (1) für Förderanlagen nach Anspruch 1,
**dadurch gekennzeichnet,**
**dass** der Tilger (21) mindestens in zwei Raumrichtungen auf unterschiedliche Tilgereigenfrequenzen abgestimmt ist.

3. Antriebssystem (1) für Förderanlagen nach Anspruch 1 oder 2,
**dadurch gekennzeichnet,**
**dass** die Gesamtmasse des Tilgers (21) kleiner 10%, vorzugsweise kleiner 5%, der Masse des Antriebssystems (1) ohne Tilger (21) beträgt.

4. Antriebssystem (1) für Förderanlagen nach einem der vorhergehenden Ansprüche,
**dadurch gekennzeichnet,**
**dass** der Tilger (21) zur Vermeidung von Kippmomenten flächig gelagert ist.

5. Antriebssystem (1) für Förderanlagen nach einem der vorhergehenden Ansprüche,
**dadurch gekennzeichnet,**
**dass** ein Podest (31) für die flächige Lagerung vorgesehen ist.

6. Antriebssystem (1) für Förderanlagen nach einem der vorhergehenden Ansprüche für Förderanlagen nach Anspruch 1 oder 2,
**dadurch gekennzeichnet,**
**dass** für das Antriebssystem (1) eine Schwinge (15) zur Lagerung und Befestigung von Komponenten des Antriebsstranges wie Motor (3) und Getriebe (13) vorgesehen ist und der Tilger (21) am motorseitigen Ende (19) der Schwinge angeordnet ist.

7. Antriebssystem (1) für Förderanlagen nach Anspruch 6,
**dadurch gekennzeichnet,**
**dass** die Schwinge am motorseitigen Ende (19) ein Podest (31) mit einer horizontal/axial ausgerichteten Podestgrundplatte (33) für eine flächige Lagerung des Tilgers (21) aufweist.

8. Antriebssystem (1) für Förderanlagen nach einem der vorhergehenden Ansprüche 6 oder 7,
**dadurch gekennzeichnet,**
**dass** der Tilger (21) durch mindestens eine Stütze (35) in vertikaler Richtung abgestützt ist.

9. Antriebssystem (1) für Förderanlagen nach einem der vorhergehenden Ansprüche,
**dadurch gekennzeichnet,**
**dass** der Tilger (21) einen Elastomer der Härte 25 bis 95 Shore, vorzugsweise 70 bis 80 Shore A, umfasst.

10. Antriebssystem (1) für Förderanlagen nach einem der vorhergehenden Ansprüche,
**dadurch gekennzeichnet,**
**dass** der Dämpfungsgrad D des Tilgers im Bereich von 0,04 bis 0,16, vorzugsweise 0,07 bis 0,15, liegt.

11. Schwinge (15) für ein Antriebssystem (1) für Förderanlagen nach Anspruch 1, mit mindestens einem Motor und einem Getriebe,
**dadurch gekennzeichnet,**
**dass** die Schwinge an einem axialen Ende mit einem Podest (31) für eine flächige Lagerung eines Tilgers (21) versehen ist,

12. Schwinge (15) für ein Antriebssystem (1) für Förderanlagen nach Anspruch 11,
**dadurch gekennzeichnet,**
**dass** wobei das Podest für eine vertikale Abstützung mindestens eine Stütze (35) umfasst.

## Claims

1. Drive system (1) for conveyor systems with a motor (3) and a transmission (13) mounted on a swing arm (15), **characterized in that** the swing arm is mounted by means of a torque support (41), an absorber (21) being arranged at the axial motor-side end (19) of the swing arm (15), the absorber being arranged spaced apart from the torque support for the provision of a lever.

2. Drive system (1) for conveyor systems according to Claim 1, **characterized in that** the absorber (21) is tuned to different absorber natural frequencies at least in two spatial directions.

3. Drive system (1) for conveyor systems according to Claim 1 or 2, **characterized in that** the overall mass of the absorber (21) is less than 10%, preferably less than 5%, of the mass of the drive system (1) without absorber (21) .

4. Drive system (1) for conveyor systems according to one of the preceding claims, **characterized in that** the absorber (21) is mounted over the full area in order to avoid tilting moments.

5. Drive system (1) for conveyor systems according to one of the preceding claims, **characterized in that** a platform (31) is provided for the full-area mounting.

6. Drive system (1) for conveyor systems according to one of the preceding claims for conveyor systems according to Claim 1 or 2, **characterized in that**, for the drive system (1), a swing arm (15) is provided for mounting and fastening components of the drive train such as a motor (3) and a transmission (13), and the absorber (21) is arranged at the motor-side end (19) of the swing arm.

7. Drive system (1) for conveyor systems according to Claim 6, **characterized in that**, at the motor-side end (19), the swing arm has a platform (31) with a horizontally/axially oriented platform base plate (33) for full-area mounting of the absorber (21).

8. Drive system (1) for conveyor systems according to either of the preceding Claims 6 and 7, **characterized in that** the absorber (21) is supported in the vertical direction by way of at least one support (35).

9. Drive system (1) for conveyor systems according to one of the preceding claims, **characterized in that** the absorber (21) comprises an elastomer with a hardness of from 25 to 95 Shore, preferably of from 70 to 80 Shore A.

10. Drive system (1) for conveyor systems according to one of the preceding claims, **characterized in that** the damping ratio D of the absorber lies in the range from 0.04 to 0.16, preferably from 0.07 to 0.15.

11. Swing arm (15) for a drive system (1) for conveyor systems according to Claim 1, with at least one motor and a transmission, **characterized in that**, at an axial end, the swing arm is provided with a platform (31) for full-area mounting of an absorber (21).

12. Swing arm (15) for a drive system (1) for conveyor systems according to Claim 11, **characterized in that** the platform comprises at least one support (35) for vertical support.

## Revendications

1. Système d'entraînement (1) pour des installations de transport comprenant un moteur (3) et une transmission (13) supportés sur une bielle oscillante (15),
**caractérisé en ce que**
la bielle oscillante est supportée au moyen d'un support de couple (41), un amortisseur (21) étant disposé au niveau de l'extrémité axiale côté moteur (19) de la bielle oscillante (15), l'amortisseur étant disposé à distance du support de couple pour fournir un levier.

2. Système d'entraînement (1) pour des installations de transport selon la revendication 1,
**caractérisé en ce que**
l'amortisseur (21) est adapté au moins dans deux directions spatiales à différentes fréquences propres d'amortissement.

3. Système d'entraînement (1) pour des installations de transport selon la revendication 1 ou 2,
**caractérisé en ce que**
la masse totale de l'amortisseur (21) est inférieure à 10 %, de préférence inférieure à 5 %, de la masse du système d'entraînement (1) sans amortisseur (21).

4. Système d'entraînement (1) pour des installations de transport selon l'une quelconque des revendications précédentes,
**caractérisé en ce que**
l'amortisseur (21) est supporté à plat pour éviter des moments de basculement.

5. Système d'entraînement (1) pour des installations de transport selon l'une quelconque des revendications précédentes,
**caractérisé en ce**
**qu'**un piédestal (31) est prévu pour le support à plat.

6. Système d'entraînement (1) pour des installations de transport selon l'une quelconque des revendications précédentes pour des installations de transport selon la revendication 1 ou 2,
**caractérisé en ce**
**qu'**une bielle oscillante (15) pour supporter et fixer des composants de la chaîne cinématique tels que le moteur (3) et la transmission (13) est prévue pour le système d'entraînement (1), et l'amortisseur (21) est disposé au niveau de l'extrémité côté moteur (19) de la bielle oscillante.

7. Système d'entraînement (1) pour des installations de transport selon la revendication 6,
**caractérisé en ce que**
la bielle oscillante présente, au niveau de l'extrémité côté moteur (19), un piédestal (31) avec une plaque de base de piédestal (33) orientée horizontalement/axialement pour un support à plat de l'amortisseur (21).

8. Système d'entraînement (1) pour des installations de transport selon l'une quelconque des revendications précédentes 6 et 7,
**caractérisé en ce que**
l'amortisseur (21) est supporté par au moins un support (35) dans la direction verticale.

9. Système d'entraînement (1) pour des installations de transport selon l'une quelconque des revendications précédentes,
**caractérisé en ce que**
l'amortisseur (21) comprend un élastomère de dureté 25 à 95 Shore, de préférence de dureté 70 à 80 Shore A.

10. Système d'entraînement (1) pour des installations de transport selon l'une quelconque des revendications précédentes,
**caractérisé en ce que**
le degré d'amortissement D de l'amortisseur est compris dans une plage de 0,04 à 0,16, de préférence de 0,07 à 0,15.

11. Bielle oscillante (15) pour un système d'entraînement (1) pour des installations de transport selon la revendication 1 comprenant au moins un moteur et une transmission,
**caractérisée en ce que**
la bielle oscillante est pourvue, au niveau d'une extrémité axiale, d'un piédestal (31) pour un support à plat d'un amortisseur (21).

12. Bielle oscillante (15) pour un système d'entraînement (1) pour des installations de transport selon la revendication 11,
**caractérisée en ce que**
le piédestal comprend au moins un support (35) pour un support vertical.
